# EUROPÄISCHE PATENTSCHRIFT

(11) **EP 2 885 199 B1**
(45) Veröffentlichungstag und Bekanntmachung des Hinweises auf die Patenterteilung: **21.09.2016**
(21) Anmeldenummer: 14707967.7
(22) Anmeldetag: 24.02.2014
(51) Int. Cl.: B62D 53/00

(54) **ROUTENZUGANHÄNGER**
TRAILER
REMORQUE DE TRAIN DE REMORQUES

(30) Priorität: 21.05.2013 DE 202013102199 U
(43) Veröffentlichungstag der Anmeldung: 24.06.2015
(73) Patentinhaber: LR Intralogistik GmbH, 84109 Wörth a. d. Isar (DE)
(72) Erfinder: BERGHAMMER, Fritz, 84036 Landshut (DE)
(74) Vertreter: Geirhos, Johann
(86) Internationale Anmeldenummer: PCT/EP2014/053513
(87) Internationale Veröffentlichungsnummer: WO 2014/187581

(56) Entgegenhaltungen:
- EP-A2- 0 620 183
- EP-A2- 2 487 067
- DE-A1-102011 080 857
- DE-U1-202013 100 729

## Beschreibung

Die Erfindung betrifft einen Trailerzuganhänger mit einem Lasten aufnehmenden, auf einem Fahrwerk geführten Tragrahmen nach dem Oberbegriff des Anspruchs 1.

Solche Anhänger werden immer häufiger in der maschinellen Serienfertigung von Produkten eingesetzt, beispielsweise für den Kraftfahrzeugbau, wo die einzelnen Arbeitsstationen über Trailerzüge mit den erforderlichen Bauteilen versorgt werden. In einem Trailerzug verfährt ein Zugfahrzeug eine Mehrzahl von Trailerzuganhängern, auf denen die erforderlichen Einzelteile transportiert werden. Diese sind in der Regel auf Paletten oder in Gitterboxen untergebracht, die ihrerseits auf Transportgutwagen (Trolleys) über kurze Strecken bewegt werden.

Ein nach dem Oberbegriff des Anspruchs 1 ausgebildeter Trailerzuganhänger ist aus EP 620 183 A2 (DE 694 16 440 T2) bekannt. Dieser hat einen in Draufsicht E-förmigen Tragrahmen, an dessen Mittelträger eine hakenartige Greifeinheit verschiebbar ist, die zum Erfassen eines Wagens durch einen Kippmechanismus nach unten geschwenkt werden muss. Um den Wagen greifen zu können, muss dieser exakt über den beiden Haken der Greifeinheit positioniert werden. Nach dem Einziehen des Wagens rollt dieser während des Transports mit seinen Lenkrollen gemeinsam mit den Rädern des Trailerzuganhängers auf dem Boden.

In EP 2 487 067 A2 ist ein Trailerzuganhänger beschrieben und dargestellt, dessen C-förmiger Rahmen sich in nicht veränderlicher Höhe auf Lenkrollen abstützt und in dessen Längsträger eine Hubeinrichtung mit Lastgabeln höhenbeweglich gelagert ist. Auf den Lastgabeln sind Gabelzinken verschiebbar gelagert, denen jeweils ein Schubantrieb zugeordnet ist.

Daneben sind auch Trailerzuganhänger mit Tragrahmen bekannt, die über eingebaute Hubeinrichtungen relativ zu dem Fahrwerk in der Höhe verstellt werden können, um zu vermeiden, dass während des werksinternen Transports die Lenkrollen der Trolleys auf dem Boden abrollen und das Fahrverhalten negativ beeinträchtigen. Beispiele für diesen Stand der Technik sind das europäische Patent EP 2 161 182 B1 mit einem in Draufsicht E-förmigen Tragrahmen sowie das Gebrauchsmuster DE 20 2009 001 933 U1 mit einem in Draufsicht C-förmigen Tragrahmen.

Aus EP 2 311 673 B1 ist ein Anhänger mit E-Gestell für einen Trailerzug bekannt, bei dem am Ende des Querträgers, das mit dem seitlichen Längsträger verbunden ist, ein Schieber angeordnet ist. Dieser hat die Aufgabe, eine Ausschiebebewegung einzuleiten. Weder ist der Schieber in der Lage, die Last vollständig auszuschieben noch die Last in den Tragrahmen zurückzuführen.

Der Erfindung liegt die Aufgabe zugrunde, mit einem einfachen Mechanismus für beide Systeme (E-Rahmen und C-Rahmen) eine rasche Be- und Entladung zu ermöglichen, die ohne Muskelkraft auskommt und die Bedienungsperson weitestgehend entlastet.

Zur Lösung dieser Aufgabe dient ein Trailerzuganhänger mit den Merkmalen des Anspruchs 1, wonach die Greifeinheit aus wenigstens einer endlos umlaufenden Kette besteht, von der Mitnehmerfinger abstehen, welche die aufzunehmende bzw. abzugebende Last erfassen. Hierzu läuft die Kette in einem Gehäuse um, das an dem Mittelträger rechtwinklig zum Längsträger verfahrbar ist. Dabei ist es vorteilhaft, wenn das Gehäuse an einer Führungsschiene befestigt ist und mit dieser einen Schlitten bildet, der auf einer mit dem Mittelträger verbundenen Tragschiene teleskopisch ein- und ausfahrbar ist.

Nachdem der Trailerzug an einer zu bedienenden Station neben einem Trolley oder einer Übergabestation für eine Gitterbox angehalten hat, fährt die Greifeinheit zur Seite hin aus und untergreift dabei mit zwei ihrer Mitnehmerfinger den Trolley oder die Gitterbox, um diese dann bei abgesenktem Tragrahmen auf die beiden Querträger des Tragrahmens zu ziehen. Dieser Vorgang läuft selbsttätig ab, ohne dass eine Bedienungsperson eingreifen muss oder eine vorherige, genaue Positionierung der aufzunehmenden Last erforderlich ist.

Der Vorgang läuft in umgekehrter Richtung an einer Entladestation ab, in der der Trolley oder die Gitterbox aus dem Trailerzuganhänger mittels der Greifeinheit ausgeschoben wird.

Nach einer vorteilhaften Ausgestaltung der Erfindung ist die Greifeinheit an einem Sattel angebracht, der auf den Mittelträger aufgesetzt und an diesem befestigt ist. Diese Lösung eignet sich vor allem für in Draufsicht E-förmige Tragrahmen nach EP 2 161 182, bei denen unter dem Mittelträger ein Fahrwerk mit zwei seitlich auf einer Achse gelagerten Rädern und die Hubeinrichtung angeordnet sind, die aus wenigstens einem zwischen Achse und Mittelträger abgestützten Hydraulikzylinder bestehen kann.

Alternativ besteht die Möglichkeit, den Querträger durch zwei parallele Hubzinken zu bilden, die mit ihren der Ladeöffnung des in Draufsicht C-förmigen Tragrahmens gegenüberliegenden Enden auf den oberen Rand des Längsträgers verstellbar aufgesetzt sind, was in DE 20 2009 001 933 U1 dargestellt und ausführlich erläutert ist. Der Sattel lässt sich an den beiden Hubzinken befestigen, die auf dem Längsträger zusammengeschoben sind und auf diese Weise als Querträger dienen.

Wenn die aufzunehmende und abzugebende Last, die von dem Trailerzuganhänger transportiert wird, nicht aus einem Trolley, sondern aus einer Gitterbox besteht, ist es vorteilhaft, auf jedem der beiden Querträger eine Rollenbahn anzubringen, die in der Übergabestation die Last von einer höhengleichen Rollenbahn übernimmt oder auf diese abgibt.

Die Erfindung ist nachstehend an zwei Ausführungsbeispielen erläutert, die in der Zeichnung dargestellt sind. Es zeigen:
Figur 1 die perspektivische Ansicht eines ersten Ausführungsbeispiels der Erfindung mit teleskopisch ausfahrbarer Greifeinheit zum Erfassen eines Trolleys,
Figuren 2 bis 6 der Figur 1 entsprechende Ansichten weiterer Stellungen der Greifeinheit bis zur vollständigen Übernahme des Trolleys in den Tragrahmen,
Figur 7 die schematische Seitenansicht einer Greifeinheit mit endlos umlaufender Kette beim Ausschieben eines Trolleys,
Figur 8 eine der Figur 7 entsprechende Darstellung beim Einziehen des Trolleys in den Tragrahmen,
Figur 9 die Ansicht einer Variante der Erfindung, bei der die beiden Querträger eine Rollenbahn für die Aufnahme einer Gitterbox oder einer Palette aufweisen, wobei die Greifeinheit teleskopisch ausgefahren ist,
Figur 10 die Ansicht der Einheit der Figur 9 mit eingezogener Greifeinheit,
Figur 11 eine Ansicht der in Figur 10 gezeigten Situation mit Gitterträger vor dem Ausschieben durch die Greifeinheit,
Figuren 12 bis 14 die nachfolgenden Schritte beim Abgeben der Gitterbox auf eine höhengleiche, feste Übergabestation.

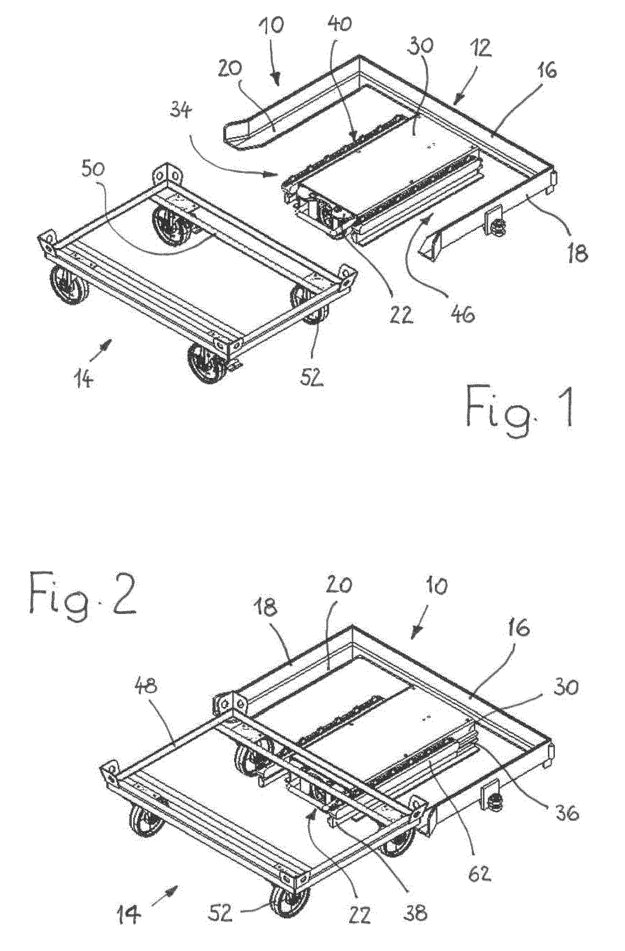

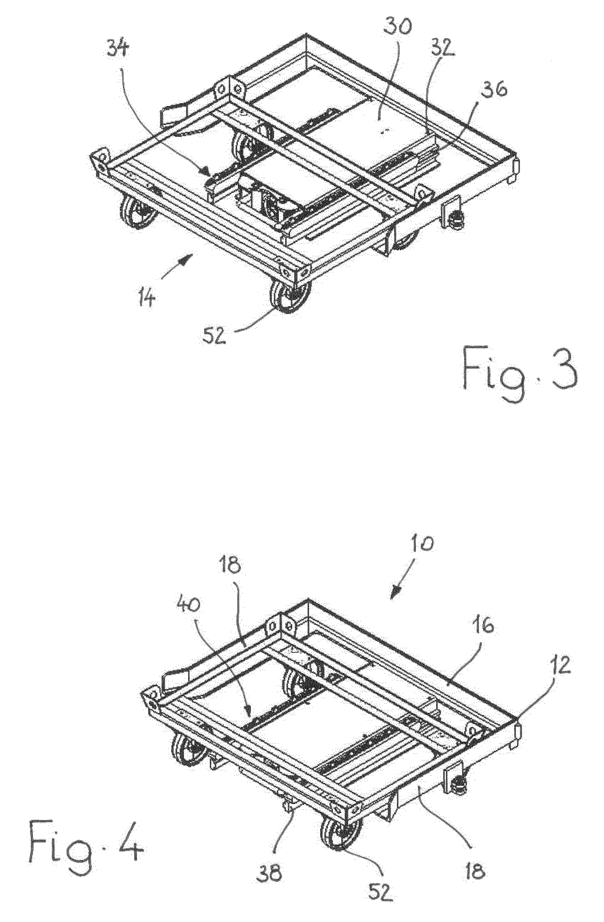

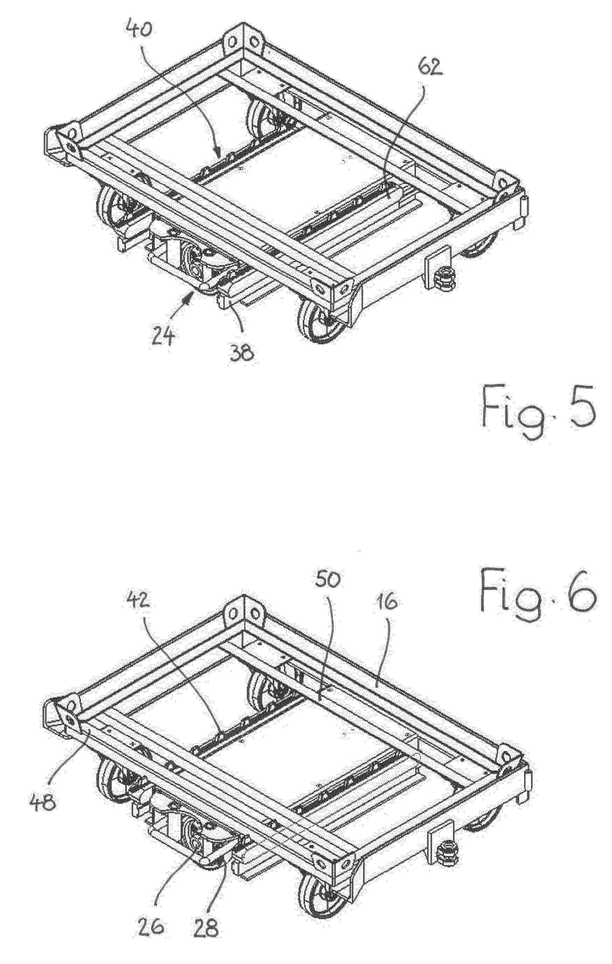

Die Figuren 1 bis 6 sowie 7 und 8 zeigen in einem ersten Anwendungsbeispiel einen Trailerzuganhänger 10 mit einem in Draufsicht E-förmigen Tragrahmen 12 beim Erfassen und Aufnehmen eines Trolleys 14. Der Tragrahmen 12 ist wie in EP 2 161 182 B1 oder in EP 2 311 673 B1 ausgebildet und besteht aus einem seitlichen Längsträger 16, von dessen beiden Enden rechtwinklig zwei Querträger 18 abstehen. Sowohl der Längsträger 16 als auch die beiden Querträger 18 haben im Querschnitt ein L-förmiges Profil mit einem umlaufenden, waagrechten Randflansch 20, auf dem sich die Last abstützt, hier der Trolley 14 in der vollständig aufgenommenen Stellung gemäß Figur 6.

Zwischen den beiden Querträgern 18 ist parallel zu diesen am Längsträger 16 ein Mittelträger 22 befestigt, unter dem ein Fahrwerk 24 mit zwei seitlich auf einer Starrachse 26 gelagerten Rädern 28 angeordnet ist. Wie bereits in EP 2 311 673 B1 erläutert und hier nicht nochmals dargestellt, ist zwischen dem Mittelträger 22 und der Starrachse 26 des Fahrwerks 24 eine Hubeinrichtung vorgesehen, die den Tragrahmen 12 relativ zu der Starrachse 26 des Fahrwerks 24 anheben und absenken kann.

In den Figuren 1 bis 6 befindet sich der Tragrahmen 12 des Trailerzuganhängers 10 in seiner abgesenkten Stellung, in der er den Trolley 14 aufnehmen kann. Hierzu ist an beiden Seiten eines Sattels 30, der am Mittelträger 22 mit Hilfe von Schrauben 32 befestigt ist, eine Greifeinheit 34 angebracht. Diese hat eine seitlich am Sattel 30 befestigte Tragschiene 36, auf der eine Führungsschiene 38 teleskopisch verfahrbar ist. Die hierzu erforderliche Antriebseinheit kann für beide Greifeinheiten 34 gemeinsam unter dem Sattel 30 eingebaut sein, was nicht weiter dargestellt ist.

An jeder der beiden Führungsschienen 38 ist ein Gehäuse 62 mit einer endlos umlaufenden Kette 40 befestigt, von der Mitnehmerfinger 42 nach außen abstehen. Die Führungsschiene 38 bildet zusammen mit dem aus Kette 40 und Gehäuse 62 bestehenden Kettenförderer einen teleskopisch ausfahrbaren Schlitten 44.

In der in den Figuren 1 bis 6 gezeigten Übernahmesituation befindet sich vor der Ladeöffnung 46 des Tragrahmens 12, die dem Längsträger 16 gegenüberliegt, ein zu übernehmender Trolley 14. In der abgesenkten Stellung des Tragrahmens 12 werden nun die beiden Greifeinheiten 34 durch die Ladeöffnung 46 ausgefahren, wobei auf beiden Seiten der aus Führungsschienen 38 und Gehäuse 62 mit Kettenförderern gebildete Schlitten 44 teleskopisch ausgefahren wird, bis er unter den Rahmen 48 des Trolleys 14 fasst. In dieser vollständig ausgefahrenen Stellung des Schlittens 44 ergreifen die Mitnehmerfinger 42 der Ketten 40 den dem Längsträger 16 gegenüberliegenden Längsholm 50 des Rahmens des Trolleys 14 und ziehen diesen bei laufenden Ketten 40 in den Tragrahmen 12 hinein, wobei die Lenkrollen 52 des Trolleys 14 auf dem Boden abrollen. In der vollständig eingezogenen Stellung des Trolleys 14 wird über einen nicht dargestellten Endschalter der Antriebsmotor der beiden Ketten 40 ausgeschaltet und gleichzeitig mittels der ebenfalls nicht dargestellten Hubeinrichtung der Tragrahmen 12 des Anhängers 10 angehoben, so dass die Lenkrollen 52 des Trolleys 14 außer Eingriff mit dem Boden kommen.

Zum Entladen des Trailerzuganhängers 10 laufen die erläuterten Schritte in umgekehrter Reihenfolge ab.

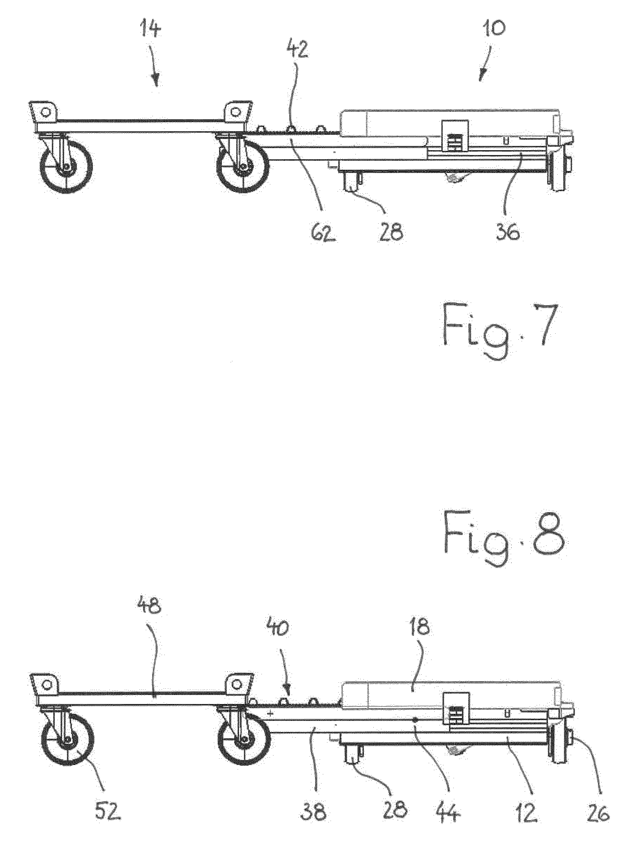

Den Seitenansichten der Figuren 7 und 8 ist deutlich zu entnehmen, dass die an beiden Seiten des Sattels 30 angebrachten Tragschienen 36 jeweils eine Führungsschiene 38 in Querrichtung verschiebbar aufnehmen. Zusammen mit dem Gehäuse 62 bildet die Führungsschiene 38 einen Schlitten 44, der auf der Tragschiene 36 in Querrichtung ein- und ausgefahren werden kann.

Nicht dargestellt ist die in Anspruch 10 aufgezeigte Möglichkeit, in einem eingangs erwähnten, C-förmigen Tragrahmen gemäß DE 20 2009 001 933 zwei Hubzinken mittig zusammenzufahren, um einen Mittelträger zu bilden, auf dem die Greifeinheit 34 angebracht werden kann.

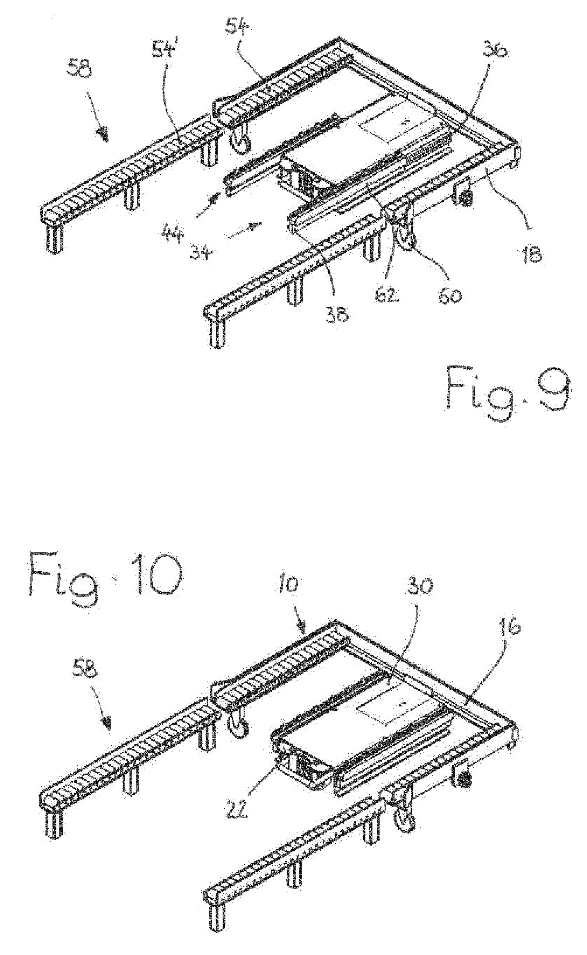

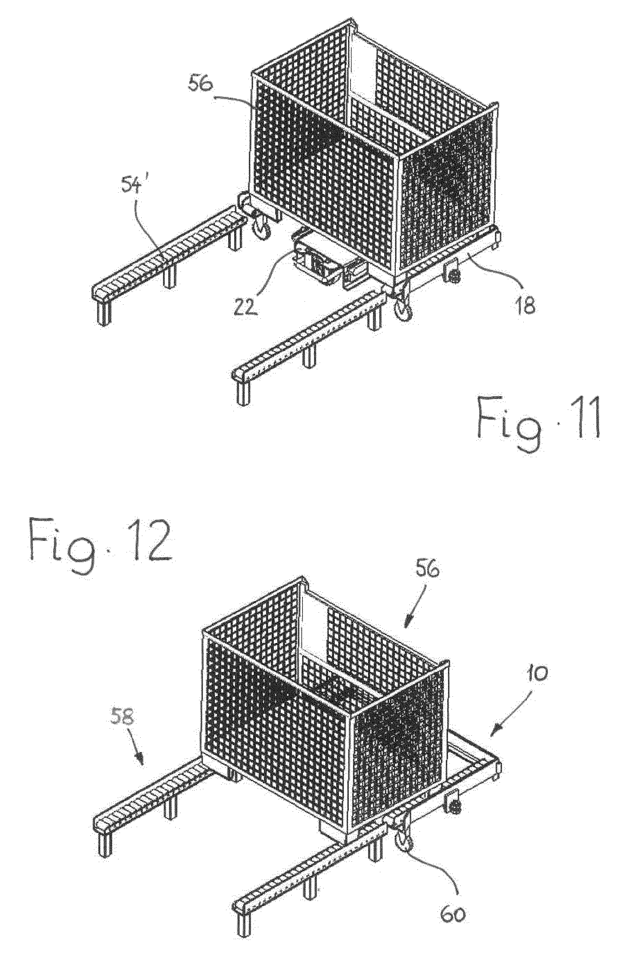

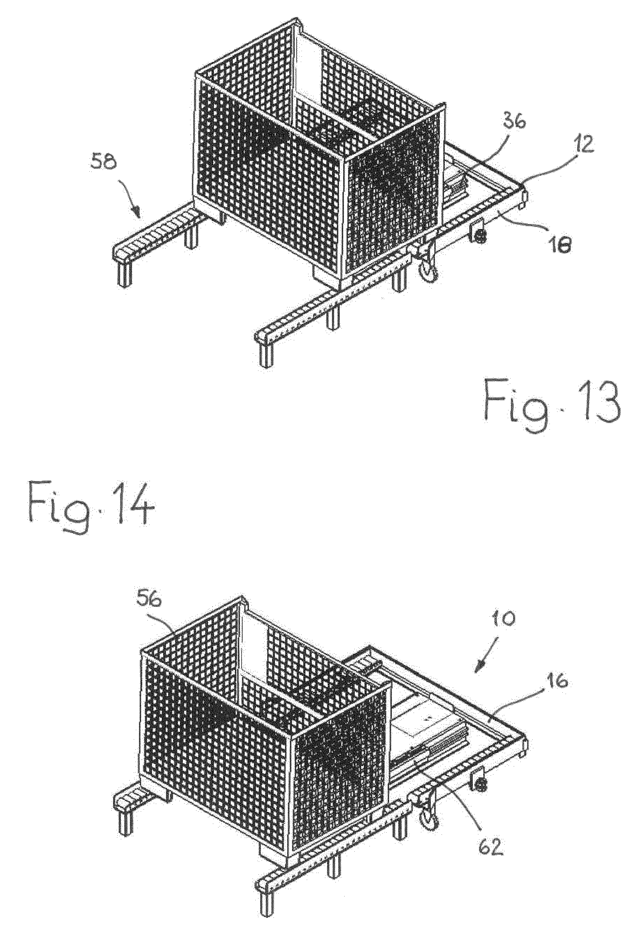

Die Figuren 9 bis 14 zeigen ein weiteres Ausführungsbeispiel der Erfindung, gemäß welchem die beiden Querträger 18 des Tragrahmens 12 mit jeweils einer Rollenbahn 54 bestückt sind. Diese dienen zur durch die Greifeinheiten 34 unterstützten Aufnahme bzw. Abgabe einer Gitterbox 56, einer Palette oder dergleichen, die nicht, wie in dem zuvor erläuterten Ausführungsbeispiel, mit Lenkrollen bestückt sind. Hier ist zur Übernahme bzw. zur Abgabe einer Gitterbox 56 eine ortsfeste Übergabestation 58 vorgesehen, die aus zwei zueinander parallelen Rollenbahnen 54' bestehen, die in der Übergabestellung auf derselben, abgesenkten Höhe der Querträger 18 des Tragrahmens 12 liegen. Um ein Kippen des Tragrahmens 12 um die Achse 26 des Fahrwerks 24 zu vermeiden, sind an den beiden Querträgern 18 des Tragrahmens 12 Stützrollen 60 angebracht.

## Patentansprüche

1. Trailerzuganhänger mit einem Lasten aufnehmenden, auf einem Fahrwerk (24) geführten Tragrahmen (12), der aus einem seitlichen Längsträger (16) und zwei von dessen beiden Enden rechtwinklig abstehenden Querträgern (18) besteht, zwischen denen parallel zu diesen am Längsträger (16) ein Mittelträger (22) befestigt und eine dem Längsträger (22) gegenüberliegende Ladeöffnung (46) ausgebildet ist, wobei am Mittelträger (22) eine zwischen dem Längsträger (16) und der Ladeöffnung (46) in Querrichtung verfahrbare, die Last erfassende Greifeinheit (34) angeordnet ist, **dadurch gekennzeichnet, dass** die Greifeinheit (34) aus wenigstens einer endlos umlaufenden Kette (40) besteht, von der Mitnehmerfinger (42) abstehen und die in einem Gehäuse (62) umläuft, das an dem Mittelträger (22) rechtwinklig zum Längsträger (16) verfahrbar ist, wobei zwischen dem Tragrahmen (12) und dem Fahrwerk (24) zur gegenseitigen Höhenverstellung eine Hubeinrichtung angeordnet ist.

2. Trailerzuganhänger nach Anspruch 1, **dadurch gekennzeichnet, dass** das Gehäuse (62) mit einer dieses aufnehmenden Führungsschiene (38) einen Schlitten (44) bildet, der auf einer mit dem Mittelträger (22) verbundenen Tragschiene (36) teleskopisch ein- und ausfahrbar ist.

3. Trailerzuganhänger nach Anspruch 1 oder 2, **dadurch gekennzeichnet, dass** die Greifeinheit (34) an einem Sattel (30) angebracht ist, der auf den Mittelträger (22) aufgesetzt und an diesem befestigt ist.

4. Trailerzuganhänger nach Anspruch 2 und 3, **dadurch gekennzeichnet, dass** auf jeder Seite des Sattels (30) ein Schlitten (44) an einer Tragschiene (36) teleskopisch verfahrbar ist.

5. Trailerzuganhänger nach einem der vorhergehenden Ansprüche, **dadurch gekennzeichnet, dass** auf jedem der beiden Querträger (18) eine Rollenbahn (54) angebracht ist.

6. Trailerzuganhänger nach einem der vorhergehenden Ansprüche, **dadurch gekennzeichnet, dass** unter dem Mittelträger (22) ein Fahrwerk (24) mit zwei seitlich auf einer Achse (26) gelagerten Rädern (28) und die Hubeinrichtung angeordnet sind.

7. Trailerzuganhänger nach Anspruch 6, **dadurch gekennzeichnet, dass** die Hubeinrichtung wenigstens einen zwischen der Achse (26) und dem Mittelträger (22) abgestützten Hydraulikzylinder aufweist.

8. Trailerzuganhänger nach Anspruch 6 oder 7, **dadurch gekennzeichnet, dass** an den Querträgern (18) des Tragrahmens (12) Stützrollen (60) angebracht sind.

9. Trailerzuganhänger nach einem der Ansprüche 1 bis 5, **dadurch gekennzeichnet, dass** der Querträger (18) durch zwei parallele Hubzinken gebildet ist, die mit ihrem der Ladeöffnung (46) des in Draufsicht C-förmigen Tragrahmens (12) gegenüberliegenden Ende auf den oberen Rand des Längsträgers (16) aufgesetzt sind.

10. Trailerzuganhänger nach Anspruch 9, **dadurch gekennzeichnet, dass** sich die beiden Querträger (18) des Tragrahmens (12) über Hydraulikzylinder der Hubeinrichtung auf dem darunter angeordneten Fahrwerk (24) höhenverstellbar abstützen.

## Claims

1. Road train trailer having a load-receiving supporting frame (12) which is guided on running gear (24) and consists of a lateral longitudinal member (16) and two cross members (18) which protrude at right angles from the two ends of the longitudinal member and between which a central member (22) is fastened to the longitudinal member (16) parallel to said cross members, and a loading opening (46) opposite the longitudinal member (22) is formed, wherein a gripping unit (34) is arranged on the central member (22), said gripping unit being movable in the transverse direction between the longitudinal member (16) and the loading opening (46) and grasping the load, **characterized in that** the gripping unit (34) consists of at least one endlessly revolving chain (40) from which trailing fingers (42) protrude and which revolves in a housing (62) which is movable on the central member (22) at right angles to the longitudinal member (16), wherein a lifting device is arranged between the supporting frame (12) and the running gear (24) for the mutual height adjustment.

2. Road train trailer according to Claim 1, **characterized in that** the housing (62) together with a guide rail (38) receiving the latter forms a carriage (44) which is telescopically retractable and extendable on a supporting rail (36) connected to the central member (22).

3. Road train trailer according to Claim 1 or 2, **characterized in that** the gripping unit (34) is mounted on a saddle (30) which is placed onto the central member (22) and is fastened thereto.

4. Road train trailer according to Claims 2 and 3, **characterized in that** a carriage (44) is movable telescopically on a supporting rail (36) on each side of the saddle (30).

5. Road train trailer according to one of the preceding claims, **characterized in that** a roller conveyor (54) is mounted on each of the two cross members (18).

6. Road train trailer according to one of the preceding claims, **characterized in that** a running gear (24) having two wheels (28) mounted laterally on an axle (26) and the lifting device are arranged under the central member (22).

7. Road train trailer according to Claim 6, **characterized in that** the lifting device has at least one hydraulic cylinder supported between the axle (26) and the central member (22).

8. Road train trailer according to Claim 6 or 7, **characterized in that** supporting rollers (60) are mounted on the cross members (18) of the supporting frame (12).

9. Road train trailer according to one of Claims 1 to 5, **characterized in that** the cross member (18) is formed by two parallel prongs which are placed at their end opposite the loading opening (46) of the supporting frame (12), which is C-shaped in top view, onto the upper edge of the longitudinal member (16).

10. Road train trailer according to Claim 9, **characterized in that** the two cross members (18) of the supporting frame (12) are supported on the running gear (24) arranged therebelow so as to be height-adjustable via hydraulic cylinders of the lifting device.

## Revendications

1. Remorque de train de remorques comprenant un châssis porteur (12) recevant des charges, guidé sur un train de roulement (24), qui se compose d'un longeron latéral (16) et de deux traverses (18) saillant à angle droit à partir de ses deux extrémités, entre lesquelles, parallèlement à celles-ci, un support central (22) est fixé au longeron (16), et une ouverture de chargement (46) opposée au longeron (22) est réalisée, une unité de préhension (34) saisissant la charge, déplaçable dans la direction transversale entre le longeron (16) et l'ouverture de chargement (46), étant disposée au niveau du support central (22), **caractérisée en ce que** l'unité de préhension (34) se compose d'au moins une chaîne à circulation sans fin (40), depuis laquelle font saillie des doigts d'entraînement (42) et qui circule dans un boîtier (62) qui peut être déplacé à angle droit par rapport au longeron (16) sur le support central (22), un dispositif de levage étant disposé entre le châssis porteur (12) et le train de roulement (24) en vue de leur réglage mutuel en hauteur.

2. Remorque de train de remorques selon la revendication 1, **caractérisée en ce que** le boîtier (62) forme avec un rail de guidage (38) recevant celui-ci un chariot (44) qui peut être entré et sorti de manière télescopique sur un rail porteur (36) connecté au support central (22).

3. Remorque de train de remorques selon la revendication 1 ou 2, **caractérisée en ce que** l'unité de préhension (34) est montée sur une sellette (30) qui est posée sur le support central (22) et fixée à celui-ci.

4. Remorque de train de remorques selon les revendications 2 et 3, **caractérisée en ce qu'**un chariot (44) peut être déplacé de manière télescopique sur un rail porteur (36) de chaque côté de la sellette (30).

5. Remorque de train de remorques selon l'une quelconque des revendications précédentes, **caractérisée en ce qu'**un convoyeur à rouleaux (54) est monté sur chacune des deux traverses (18).

6. Remorque de train de remorques selon l'une quelconque des revendications précédentes, **caractérisée en ce qu'**un train de roulement (24) avec deux roues (28) supportées latéralement sur un essieu (26) et le dispositif de levage sont disposés en dessous du support central (22).

7. Remorque de train de remorques selon la revendication 6, **caractérisée en ce que** le dispositif de levage présente au moins un vérin hydraulique supporté entre l'essieu (26) et le support central (22).

8. Remorque de train de remorques selon la revendication 6 ou 7, **caractérisée en ce que** des galets de support (60) sont montés sur les traverses (18) du châssis porteur (12).

9. Remorque de train de remorques selon l'une quelconque des revendications 1 à 5, **caractérisée en ce que** la traverse (18) est formée par deux branches de levage parallèles qui sont posées sur le bord supérieur du longeron (16) avec leur extrémité opposée à l'ouverture de chargement (46) du châssis porteur (12) en forme de C en vue de dessus.

10. Remorque de train de remorques selon la revendication 9, **caractérisée en ce que** les deux traverses (18) du châssis porteur (12) s'appuient de manière réglable en hauteur par le biais de vérins hydrauliques du dispositif de levage sur le train de roulement (24) disposé en dessous.
